# EUROPÄISCHE PATENTSCHRIFT

(11) **EP 1 566 874 B1**
(45) Veröffentlichungstag und Bekanntmachung des Hinweises auf die Patenterteilung: **14.10.2009**
(21) Anmeldenummer: 05003482.6
(22) Anmeldetag: 18.02.2005
(51) Int. Cl.: H02H 5/08, H01H 36/02, H01F 27/40

(54) **Transformatoren-Schutzrelais**
Transformer protection relay
Relais de protection pour transformateurs

(30) Priorität: 19.02.2004 DE 102004008026
(43) Veröffentlichungstag der Anmeldung: 24.08.2005
(73) Patentinhaber: Elektromotoren und Gerätebau Barleben GmbH, 39179 Barleben (DE)
(72) Erfinder: Olbricht, Klaus-Dieter, 39179 Barleben (DE)
(74) Vertreter: Leinung, Günter

(56) Entgegenhaltungen:
- DE-A1- 3 248 274
- DE-A1- 4 136 639
- DE-A1- 19 707 139

## Beschreibung

Die Erfindung betrifft ein Transformatoren-Schutzrelais nach dem Prinzip eines "Buchholz-Relais", zur Überwachung der Gasentstehung in flüssigkeitsgefüllten Hochspannungsanlagen und zum Schutz derartiger Anlagen, insbesondere von Hochspannungs-Leistungs-Transformatoren und Stufenschaltern.

Die Entstehung von nicht gelösten Gasen bei Anlagen der voranstehend genannten Art weisen in der Regel auf einen Defekt hin. Diese Gase können durch Zersetzung der Flüssigkeit infolge von Hitze, Teilentladungen, Durchschlägen oder anderen Einflüssen erzeugt werden oder auch von außen eindringen. Wird die Gasentstehung sowohl hinsichtlich ihres Volumens als auch hinsichtlich ihres zeitlichen Verlaufes erfasst, können Rückschlüsse auf die ordnungsgemäße Funktion der jeweiligen Anlage gezogen werden.

Eine bekannte, allgemein als "Buchholz-Relais" bezeichnete und in der DE 41 36 639 C2 beschriebene Vorrichtung zum Erfassen der Entstehung bestimmter Gasvolumina wird beispielsweise zum Schutz von Hochspannungstransformatoren eingesetzt. Dieses "Buchholz-Relais" wird in eine Verbindungsleitung geschaltet, die das flüssigkeitsgefüllte Transformatorengehäuse mit einem Ausgleichsbehälter verbindet, über den die Ausdehnung der Flüssigkeitsfüllung beispielsweise bei Temperaturunterschieden ausgeglichen wird.
Das "Buchholz-Relais" umfasst einen Sammelraum, in welchem ein auf dem Flüssigkeitsspiegel aufliegender Schwimmer angeordnet ist, der mit einer Signalerzeugungseinrichtung gekoppelt ist. Die nicht gelösten, in der Flüssigkeit aufsteigenden Gase gelangen auf ihrem Weg zu dem Ausgleichsbehälter in den Sammelraum des Relais, aus welchem sie entsprechend ihrem Volumen die Flüssigkeit verdrängen. Sobald das Absinken des Flüssigkeitsspiegels ein bestimmtes Niveau erreicht hat, wird ein Warnsignal ausgelöst.

Der Nachteil des "Buchholz-Relais" in der bekannten Art besteht darin, dass es zwar die quantitative Erfassung der Gasentstehung ermöglicht, es aber keine Aussage über deren zeitlichen Verlauf liefert. Gerade der zeitliche Verlauf der Gasentstehung stellt jedoch ein sehr bedeutendes Kriterium für die Beurteilung der Art der jeweiligen Gasentstehung dar und ist gleichfalls von Bedeutung bei der Einschätzung und Wertung eventuell eintretender Störfälle.

Aus dem Stand der Technik sind bereits Lösungen bekannt, mit denen diese Nachteile beseitigt werden sollen.

So beschreibt die DE 198 22 868C1 eine Vorrichtung zum Erfassen der Entstehung von nicht gelösten Gasen in Hochspannungsanlagen, die dem in den Anlagen vorhandenen "Buchholz-Relais" zugeordnet ist.
Die Vorrichtung selbst besteht aus einem Gehäuse mit Innenraum, in dem eine Flüssigkeit gefüllt und am Gehäuse ein Flüssigkeitsanschluss vorhanden ist, mit einer an den Innenraum angeschlossenen Ultraschallmesseinrichtung, welche zum Messen des Abstandes des Spiegels der in dem Innenraum enthaltenen Flüssigkeit zu einer Bezugsfläche bestimmt ist, mit einer Entlüftungseinrichtung, mittels der das Gehäuse entlüftbar ist, und mit einer Druckausgleichseinrichtung ausgestattet ist, welche einen Druckausgleich bewirkt, wenn nicht gelöstes Gas in den Innenraum einströmt.
Diese Vorrichtung steht mit dem in der Anlage vorgesehenen "Buchholz-Relais" in Verbindung, stellt weitestgehend eine Zusatzeinrichtung für das "Buchholz-Relais" dar. Wird auf ein in der Anlage vorhandenes "Buchholz-Relais" die beschriebene Gaserfassungseinrichtung angebracht und mit dem geöffneten Entlüftungsventil des Relais verschraubt, so kann das "Buchholz-Relais" seine eigentliche Aufgabe nicht mehr erfüllen. Durch die ständige Entlüftung bleibt das Relais wesentlich länger, entsprechend dem Volumen der Kammer des Zusatzgerätes, vollständig mit Flüssigkeit gefüllt und die Schwimmer im "Buchholz-Relais" können nicht mehr absinken, um dann die Kontakte auszulösen. Erst bei verhältnismäßig großem Gasvolumen kommt es zur Signalisierung eines Fehlers und gegebenenfalls zur Abschaltung des Transformators.

Eine weitere Vorrichtung zur Erfassung ungelöster Gase in mit Flüssigkeit gefüllten Anlagen, insbesondere Hochspannungsanlagen, beschreibt die DE 101 33 615 C2.
Diese Vorrichtung weist ein mit der Flüssigkeit der Anlage bzw. mit einem "Buchholz-Relais" in Verbindung stehendes, mit einer Messeinrichtung versehenes Gehäuse auf, bei der die Messeinrichtung aus einer Differenzdruckmesseinrichtung besteht, die über flüssigkeitsgefüllte Leitungen mit mindestens zwei Druckmessanschlüssen verbunden ist, von denen der eine den sich im Inneren des Gehäuses in Abhängigkeit von dem einströmenden Gasvolumen entstehenden Flüssigkeitsdruck und der andere den Flüssigkeitsdruck einer Flüssigkeitssäule misst, die sich mit ihrem nach oben offenen Ende bis geringfügig unterhalb der Höhe des Kopfteiles des Gehäuses erstreckt.

Auch diese Vorrichtung ist als eine Zusatzvorrichtung ausgebildet, die unmittelbar mit dem in der Anlage vorhandenen "Buchholz-Relais" verbunden ist.
Nachteilig bei diesen bekannten Lösungen ist, dass zusätzliche Einrichtungen geschaffen werden müssen, was zum einen mit hohen Investitionsaufwendungen und zum anderen mit erhöhten Überwachungs-Service-Leistungen verbunden ist.

Eine Schutzvorrichtung zur Überwachung der Gasentstehung mit einem oberen und einem unteren Schwimmer ist aus DE 197 07 139 bekannt.

Der vorliegenden Erfindung liegt daher die Aufgabe zugrunde, ein Transformatoren-Schutzrelais auf der Grundlage des Prinzips eines "Buchholz-Relais" zu entwickeln, mit dem, unter weitgehender Beseitigung der Nachteile des Standes der Technik, eine präzise Erfassung von Gasansammlungen im zeitlichen Verlauf ihrer Entstehung und ihrer volumenmäßigen Herausbildung im Inneren eines Relais möglich ist.

Erfindungsgemäß wird die Aufgabe mit den Merkmalen des Anspruches 1 gelöst.

Vorteilhafte Ausführungen und besondere Gestaltungen sind Gegenstand der Unteransprüche.

So wurde ein Transformatoren-Schutzrelais, in Form und auf der Basis sowie nach dem Prinzip eines "Buchholz-Relais" arbeitend, geschaffen, welches mit einem in das Transformatoren-Schutzrelais integrierten Zustandsüberwachungssystem ausgebildet ist, dessen Messeinrichtung eine kapazitive Messsonde ist, welche im mit Flüssigkeit gefüllten Innenraum des Transformatoren-Schutzrelais angeordnet ist.
Erfinderisch ist ferner, dass die Spannungsversorgungs- und Signalleitungen des Zustandsüberwachungssystems im Anschlusskasten des Transformatoren-Schutzrelais eingebunden sind, in dem gleichfalls eine Verstärker- und Auswerteeinheit vorgesehen ist.

Zur Erfindung gehört auch, dass durch die erfindungsgemäß im Innenraum des Transformatoren-Schutzrelais angeordnete kapazitive Messsonde die Gasentwicklung innerhalb des Innenraumes in zeitlicher Folge als auch die Entwicklung des Gasvolumens kontinuierlich erfasst und die erfassten Daten der Auswerteeinheit zugeführt werden, von der ein gewandeltes elektrisches Signal, in Form einer Spannungsanzeige, zu Überwachungszentralen von Hochspannungsanlagen geführt wird. Aus den Wertangaben dieser elektrischen Spannungssignale sind Rückschlüsse bzw. Aussagen sowohl für die zeitliche Gasentwicklung als auch für die volumenmäßige Entwicklung des sich bildenden Gases ableitbar, so dass in den jeweiligen Schaltzentralen ständig Informationssignale anliegen, die Bezug nehmen auf den jeweiligen Betriebszustand der zu überwachenden Anlage.

In einer besonderen Ausführung des Transformatoren-Sehutzrelais kann die Füllstandsmessung auch auf optischen, akustischen, elektrischen, magnetischen, elektromagnetischen und mechanischen Verfahren sowie aus deren Kombinationen untereinander erfolgen, wobei die kapazitiven, induktiven und resistiven Verfahren durch die elektrische Füllstandsmessung erfasst werden.
So ist es auch möglich, eine kontinuierliche Messwerterfasaung über eine Druckmessung zu realisieren. Auch verschiedene Schwimmersysteme können kontinuierlich messen. So ist durchaus denkbar, eine Tauchankeranordnung vorzusehen, die durch eine Induktivitätsänderung der Messspule je nach Eintauchtiefe ein zum Füllstand proportionales Signal liefert.
Sollten die zur Messung oder zur Messwertauswertung genutzten Kennwerte wie Dichte, Schallgeschwindigkeit und weitere in Abhängigkeit von Umgebungseinflüssen wie Temperatur o. ä. stark schwanken, sind entsprechende aufwendige Kompensationen vorzunehmen.
Daher ist eine Zuordnung zwischen "gemessenem" Gasvolumen und tatsächlichem Gasvolumen erforderlich, was letztendlich auch nur mit weiteren erheblichen Aufwendungen zu realisieren ist.

Hier kommt insbesondere der Vorteil der erfindungsgemäßen Lösung zum Ausdruck, da zum einen die Schutzfunktion des Prinzips eines bekannten "Buchholz-Relais" erhalten bleibt und zudem das Relais noch eine erhöhte Redundanz erhält.
Von Vorteil ist ferner, dass neben dem bekannten Schwimmersystem zur Auslösung einer Gaswarnung die erfindungsgemäße Lösung ebenfalls bei Erreichen des kritischen Gasvolumens eine Gaswarnung auslösen kann und somit die vorgestellte Lösung eine Selbstüberwachung besitzt.
Ferner sei auf einen weiteren Vorteil verwiesen, der darin besteht, dass vorhandene "Buchholz-Relais" mit der erfindungsgemäßen Lösung nachgerüstet werden können, wodurch zum einen die Funktionsfähigkeit alter "Buchholz-Relais" erhöht wird und dies bei wesentlich geringeren Kostenaufwendungen gegenüber der Anordnung von bekannten Zusatzeinrichtungen.

Mit nachfolgendem Ausführungsbeispiel soll die Erfindung näher erläutert werden.

In den dazugehörigen Zeichnungen zeigen
- Figur 1:: eine Ansicht eines Transformatoren-Schutzrelais mit Blick in das Innere vom Gehäuse
- Figur 2:: eine Seitenansicht zur Figur 1

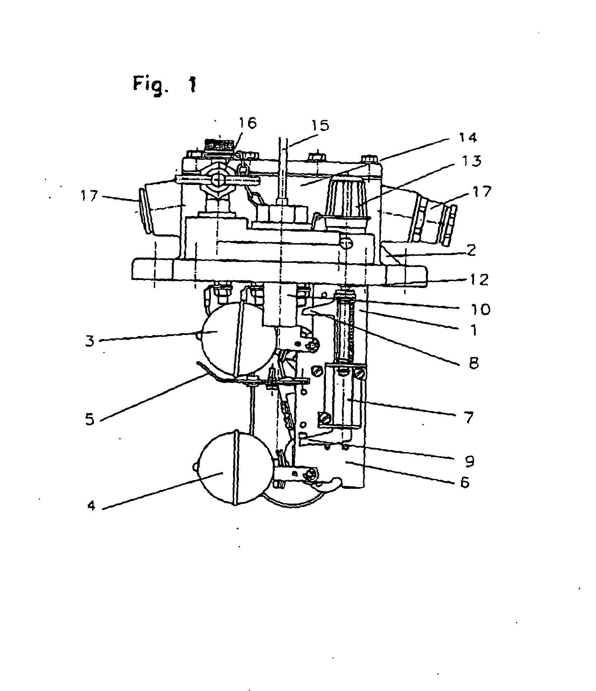

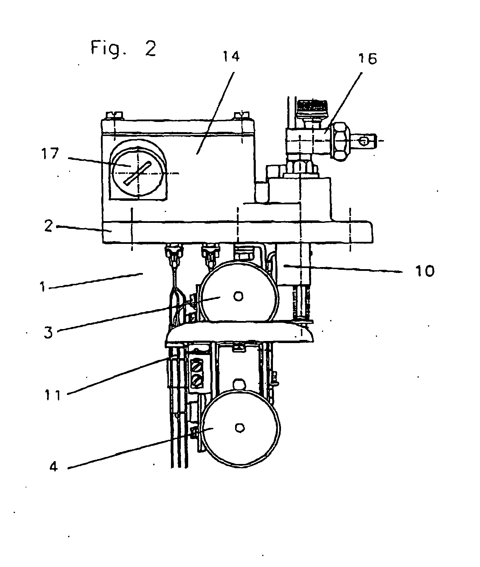

Die Darstellungen der Figuren 1 und 2 zeigen ein Schutzrelais in Form eines Buchholz-Relais, aus denen sich der Gesamtaufbau eines derartigen Schutzrelais ergibt, wobei das Gehäuse des Schutzrelais, welches den Innenraum 1 umschließt, nur angedeutet ist, somit die Anordnung der im Innenraum 1 des Schutzrelais vorgesehenen Funktionselemente erkennbar ist.

Im Innenraum 1 des Schutzrelais sind ein oberer Schwimmer 3 und ein unterer Schwimmer 4 beweglich an einer Aufnahmeplatte 6 befestigt, welche in den Innenraum 1 des Schutzrelais hineinragt. An dieser Aufnahmeplatte 6 ist auch ein Riegel 7 angeordnet, welcher mit Stellnocken 8; 9 ausgebildet ist. Der Riegel 7 mit seinen Stellnocken 8; 9 ist so an der Aufnahmeplatte 6 und somit im Innenraum 1 angeordnet, dass dieser mit der Prüftaste 12 in Verbindung steht, somit während des Betriebes des Schutzrelais die Möglichkeit von außen gegeben ist, die Funktionsfähigkeit der Schaltelemente, der Schimmer 3; 4 und der Magnetröhren 11, zu überprüfen.
Zwischen dem oberen Schwimmer 3 und dem unteren Schwimmer 4 ist ein Zwischenblech 5 vorgesehen, welches weitgehend zur Beruhigung von eventuell auftretenden Strömungen im Innenraum 1 dient, somit Fehlschaltungen ausgeschlossen werden, die nicht begründet sind durch eine Niveauabsenkung des im Innenraum 1 befindlichen Öles, dies wieder begründet durch Gasansammlungen im Innenraum 1.
Vorgesehene Magnetschaltröhren 11 stehen unmittelbar mit den Schwimmern 3; 4 in Wirkzusammenhang und bewirken die Schaltvorgänge. Die Zuordnung und die Anordnung der Magnetschaltröhren 11 ergeben sich insbesondere aus der Darstellung nach Figur 2.

Im Innenraum 1, im oberen Bereich, ist die kapazitive Messsonde 10 angeordnet, welche mit Anschlüssen 15 ausgebildet ist, mittels denen die kapazitive Messsonde 10 mit der Auswerteeinheit verbunden ist, welche im Elektroanschlusskasten 14 eingeordnet ist.

Das Oberteil 2 vom Schutzrelais ist mit dem Gehäuse über Schraubverbindungen verbunden und dichtet somit den Innenraum 1 ab.
Das Oberteil 2 ist mit den notwendigen Anschlüssen für die Versorgung des gesamten Schutzrelais und dessen Überwachung ausgebildet.
So sind am bzw. im Oberteil 2 eine Prüfeinrichtung 13, nach außen mittels einer Schutzkappe verschlossen, eine Entlüftungseinheit 16 und der Elektroanschlusskasten 14 vorgesehen.

Die Prüfeinheit 13 sowie die Entlüftungseinheit 16 sind mit dem Innenraum 1 vom Schutzrelais verbunden, so dass zum einen über die Prüfeinheit 13 die Funktionsfähigkeit der Schaltelemente überprüft werden kann und über die Entlüftungseinheit 16 die sich im Innenraum 1 herausgebildeten Gase abgeleitet werden können.
Die vorgesehenen Kabelanschlüsse 17 dienen zur Aufnahme von elektrischen Versorgungsleitungen, die in den Elektroanschlusskasten 14 münden, in dem gleichfalls die zum erfindungsgemäßen Zustandsüberwachwagssystem gehörende Auswerteeinheit vorgesehen ist.
Die Auswerteeinheit, bestehend aus einem Mikrocontroller, welcher über die Anschlüsse (15) mit der kapazitiven Messsonde (10) verbunden ist, wandelt die Kapazitätsänderung an der kapazitiven Messsonde (10) in ein Ausgangssignal, ein Spannungssignal mit einer Wertigkeit von 0 bis 10 V, um. Der Mikrocontroller ist ferner über eine weitere Leitung mit der Spannungsversorgung verbunden.

Die nachfolgenden Ausführungen beziehen sich auf die Funktionsweise des Transformatoren-Schutzrelais, wobei davon ausgegangen wird, dass der Innenraum 1 des Schutzrelais mit Öl gefüllt ist, was über die Entlüftungseinheit 16 kontrollierbar ist.
Der voll gefüllte Innenraum 1 stellt den Betriebszustand des Schutzrelais dar. Der obere Schwimmer 3 befindet sich in seiner oberen Position im Ruhezustand.
Bildet sich im oberen Bereich des Innenraumes 1 ein Gas heraus, so sinkt der Flüssigkeitsniveauspiegel ab, wodurch gleichfalls der obere Schwimmer 3 mit der Flüssigkeitsniveauveränderung absinkt.
Ist ein bestimmtes Niveau im Innenraum 1 des Schutzrelais erreicht, erfolgt über die zugehörige Magnetschaltröhrchen 11 ein Schaltvorgang, und es wird ein Warnsignal angezeigt.
Bei weiterem Niveauabfall wird weitestgehend der untere Schwimmerschalter 4 "aktiviert", und dieser schaltet dann die gesamte Anlage ab.
So die Funktionsweise der bisher zum Einsatz kommenden Buchholz-Relais, die halt nur zwei Betriebszustände erfassen, welche für die Überwachung und das Betreiben von Hochspannungsanlagen nicht befriedigend sind, da sie keine Auskunft über den Verlauf und die Entwicklung der Betriebszustände geben.

Das nach der Erfindung geschaffene Zustandsüberwachungssystem beseitigt diese Mängelzustände, indem die einzelnen Entwicklungsphasen der sich im Innenraum 1 des Schutzrelais ausbildenden Gase erfasst und ausgewertet werden. Dabei fließen das Gasvolumen und die zeitliche Folge der Gasentwicklung in diesen Prozess ein und bilden die Grundlage für die im Innenraum 1 des Schutzrelais ablaufenden Vorgänge.

Die sich durch die Änderung des Füllstandes des Öles und der Ansammlung von Gas herausbildenden Kapazitätsänderungen werden durch die Messsonde 10 erfasst und zur Auswerteeinheit geführt, dort gewandelt, und über die Auswerteeinheit wird ein elektrisches Spannungssignal zur Verfügung gestellt, welches dem standardisierten Messsignal 0 bis 10 V entspricht.
Dabei bedeutet die Spannungsangabe 10 V, dass sich im Innenraum 1 vom Schutzrelais keine Gas entwickelt hat, während die Spannungsangabe 0 V bedeutet, dass der Innenraum 1 vom Schutzrelais mit einem bestimmten Gasvolumen gefüllt ist, was einen Störungsfall darstellt.
Für den Betreiber von Hochspannungsanlagen steht mit dem übermittelten Spannungssignal eine Wertgröße zur Verfügung, welche Auskunft gibt über die Gasentwicklung (Menge und zeitlicher Verlauf) innerhalb des Schutzrelais und somit Rückschlüsse gezogen werden können auf den Betriebszustand der zu schützenden Hochspannungsanlage.

## Patentansprüche

1. Transförmatoren-Sehutzrelais nach dem Prinzip eines Buchholz-Relais zur Überwachung der Gasentstehung in flüssigkeitsgefüllten Hocbspannungsanlagen und zum Schutz derartige Anlagen, insbesondere von Hochspannungs-LeitungsTransformatoren und Stufenschaltern, dessen Innenraum (1) mit einer Flüssigkeit gefüllt ist, in dem ein oberer Schwimmer (3) sowie ein unterer Schwimmer (4) und im Oberteil (2) eine Prüfeinheit (13), eine Entlüftungseinheit (16) und ein Elektroansehlusskasten (14) vorgesehen sind, welches mit einem aus einer Messsonde (10) und einer Auswerteeinheit bestehendes Zustandsüberwachungssystem ausgebildet ist, **dadurch gekennzeichnet, dass** die Schwimmer mit zugehörigen Magnetschaltröhren ausgebildet sind, und die Auswerteeinheit im Elektroanschlusskasten (14) und die Messsonde (10) im Innenraum (1) angeordnet sind.

2. Transformatomn-Schutzrelais nach Anspruch 1, **dadurch gekennzeichnet, dass**
die Messsonde (10) als eine kapazitive Messsonde (10) ausgebildet ist.

3. Transformatoren-Schutzrelais nach den Ansprüchen 1 und 2, **dadurch gekennzeichnet, dass**
die kapazitive Messsonde (10) über Abschlüsse (15) mit der Auswerteeinheit verbunden ist

4. Transjbnnatoren-Schutzrelais nach einem der Ansprüche 1 bis 3, **dadurch gekennzeichnet, dass**
die über die kapazitive Messsonde (10) die Gasentwicklung innerhalb des Innenraumes (1) in zeitlicher Folge sowie auch die Entwicklung des Gasvolumens kontinuierlich erfasst und die erfassten Daten der Auswerteeinheit zugeführt werden, von der ein gewandeltes elektrisches Normsignal, ein Spannungssignal 0 bis 10 V, bereitgestellt wird.

5. Transformatoren-Schutzrelais nach einem der Ansprüche 1 bis 4, **dadurch gekennzeichnet, dass**
das bereitgestellte Spannungssignal als Eingangssignal für eine Überwachungsanlage/Schaltzentrale dient.

## Claims

1. Transformer protective relay according to the principle of a Buchholz relay to monitor the formation of gas in liquid-filled high voltage equipment and to protect such equipment, in particular high voltage line transformers and tap changers, the interior (1) of which is filled with a liquid, in which there are an upper float (3) and a lower float (4) and in the top part (2) a testing unit (13), an air venting unit (16) and an electrical connection box (14), which has a condition monitoring system consisting of a measuring probe (10) and an evaluation unit, **characterised in that** the floats are formed with associated magnet contact tubes and the evaluation unit is located in the electrical connection box (14) and the measuring probe (10) is located in the interior (1).

2. Transformer protection relay in accordance with Claim 1, **characterised in that**
the measuring probe (10) is in the form of a capacitive measuring probe (10).

3. Transformer protection relay in accordance with Claims 1 and 2, **characterised in that**
the capacitive measuring probe (10) is connected by connections (15) to the evaluation unit.

4. Transformer protection relay in accordance with one of the Claims 1 to 3, **characterised in that**
the development of gas inside the interior (1) is recorded sequentially with respect to time and also the development of the volume of gas continuously recorded by the capacitive measuring probe (10) and recorded data fed to the evaluation unit, from which a transformed electrical standard signal, a voltage signal 0 to 10 V, is made available.

5. Transformer protection relay in accordance with one of the Claims 1 to 4, **characterised in that**
the voltage signal made available is used as an input signal for a monitoring system/control centre.

## Revendications

1. Relais de protection de transformateurs selon le principe d'un relais Buchholz, destiné à contrôler la génération de gaz dans les installations à haute tension remplies de liquide ainsi qu'à protéger ce type d'installations, notamment les transformateurs de ligne à haute tension et les commutateurs de prises de réglage, dont l'intérieur (1) est rempli d'un liquide,
dans lequel sont prévus un flotteur supérieur (3), un flotteur inférieur (4) et, dans la partie du haut (2), une unité de contrôle (13), une unité de ventilation (16) et une boîte de raccordement électrique (14),
constitué d'un système de contrôle d'état composé d'une sonde de mesure (10) et d'une unité d'évaluation,
**caractérisé par le fait que** les flotteurs sont constitués de tubes commutateurs magnétiques correspondants et que l'unité d'évaluation est disposée dans la boîte de raccordement électrique (14) et la sonde de mesure (10) à l'intérieur (1).

2. Relais de protection de transformateurs conformément à la revendication n°1,
**caractérisé par le fait que**
la sonde de mesure (10) est conçue comme sonde de mesure capacitive (10).

3. Relais de protection de transformateurs conformément aux revendications n° 1 et n°2, **caractérisé par le fait que**
la sonde de mesure capacitive (10) est raccordée à l'unité d'évaluation au moyen de connexions (15).

4. Relais de protection de transformateurs conformément à l'une des revendications n°1 à n°3, **caractérisé par le fait que**
le dégagement de gaz par la sonde de mesure capacitive (10) dans l'espace intérieur (1) dans l'ordre chronologique ainsi que le volume de gaz généré sont collectés en permanence et les données enregistrées transférées à l'unité d'évaluation, depuis laquelle un signal électrique normalisé transformé, à savoir un signal de tension 0 à 10 V, est fourni.

5. Relais de protection de transformateurs conformément à l'une des revendications n°1 à n°4, **caractérisé par le fait que**
le signal de tension fourni sert de signal d'entrée pour une installation de contrôle/centrale de commutation.
